# EUROPÄISCHE PATENTSCHRIFT

(11) **EP 1 354 243 B1**
(45) Veröffentlichungstag und Bekanntmachung des Hinweises auf die Patenterteilung: **22.09.2004**
(21) Anmeldenummer: 02706720.6
(22) Anmeldetag: 18.01.2002
(51) Int. Cl.: G02F 1/377, G02F 1/03

(54) **VORRICHTUNG ZUM VERVIELFACHEN VON LICHTFREQUENZEN**
DEVICE FOR MULTIPLYING LIGHT FREQUENCIES
DISPOSITIF DE MULTIPLICATION DE FREQUENCES DE LUMIERE

(30) Priorität: 22.01.2001 DE 10102683
(43) Veröffentlichungstag der Anmeldung: 22.10.2003
(73) Patentinhaber: Fraunhofer-Gesellschaft zur Förderung der angewandten Forschung e.V., 80686 München (DE)
(72) Erfinder: HINKOV, Iliyana, 79199 Kirchzarten (DE); HINKOV, Vladimir, 79199 Kirchzarten (DE)
(86) Internationale Anmeldenummer: PCT/EP2002/000466
(87) Internationale Veröffentlichungsnummer: WO 2002/057846

(56) Entgegenhaltungen:
- EP-A- 0 753 767
- EP-A- 0 874 426
- DE-C- 19 514 823
- US-A- 5 349 466
- WATTS D J M ET AL: "ELECTRO-OPTIC TUNING OF THE PHASE MISMATCH IN QUASI-PHASE-MATCHED FREQUENCY DOUBLING WAVEGUIDES" JOURNAL OF APPLIED PHYSICS, AMERICAN INSTITUTE OF PHYSICS. NEW YORK, US, Bd. 79, Nr. 7, 1. April 1996 (1996-04-01), Seiten 3793-3795, XP000593922 ISSN: 0021-8979
- SUGIHARA T ET AL: "ELECTRICALLY TUNABLE GUIDED-WAVE OPTICAL FREQUENCY CONVERTER USING DYE-DOPED POLYMERS" JOURNAL OF LIGHTWAVE TECHNOLOGY, IEEE. NEW YORK, US, Bd. 16, Nr. 2, 1. Februar 1998 (1998-02-01), Seiten 239-245, XP000750664 ISSN: 0733-8724

## Beschreibung

Die Erfindung betrifft eine Vorrichtung zum Vervielfachen von Lichtfrequenzen, insbesondere von Laserlicht, mit einem optisch nichtlinearen Element, das aus einem plattenförmigen ferroelektrischen Kristall hergestellt ist und das über eine Gitterstruktur mit Normalbereichen und Inversionsbereichen verfügt, wobei in den Inversionsbereichen die Richtung der spontanen Polarisation gegenüber einer Normalrichtung in den Normalbereichen invertiert ist, und mit Elektroden zum Erzeugen eine elektrischen Feldes sowie mit einem optischen Wellenleiter, der sich zwischen zwei Stirnseiten des plattenförmigen Kristalles entlang dessen Oberseite erstreckt und dabei die Gitterstruktur quert.

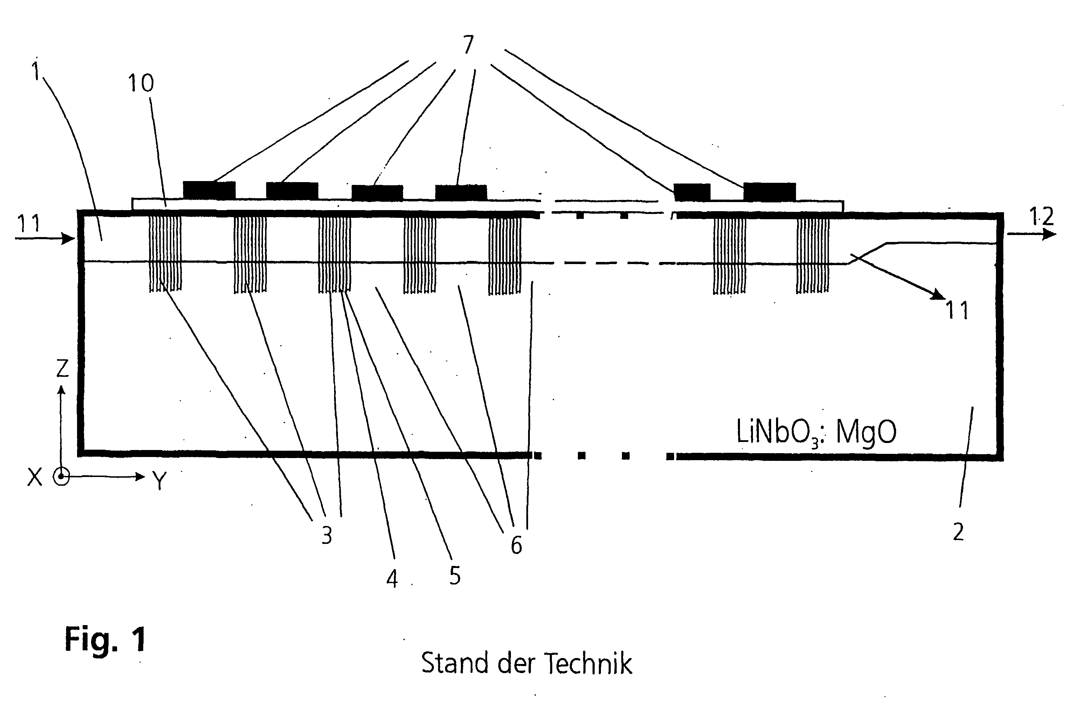

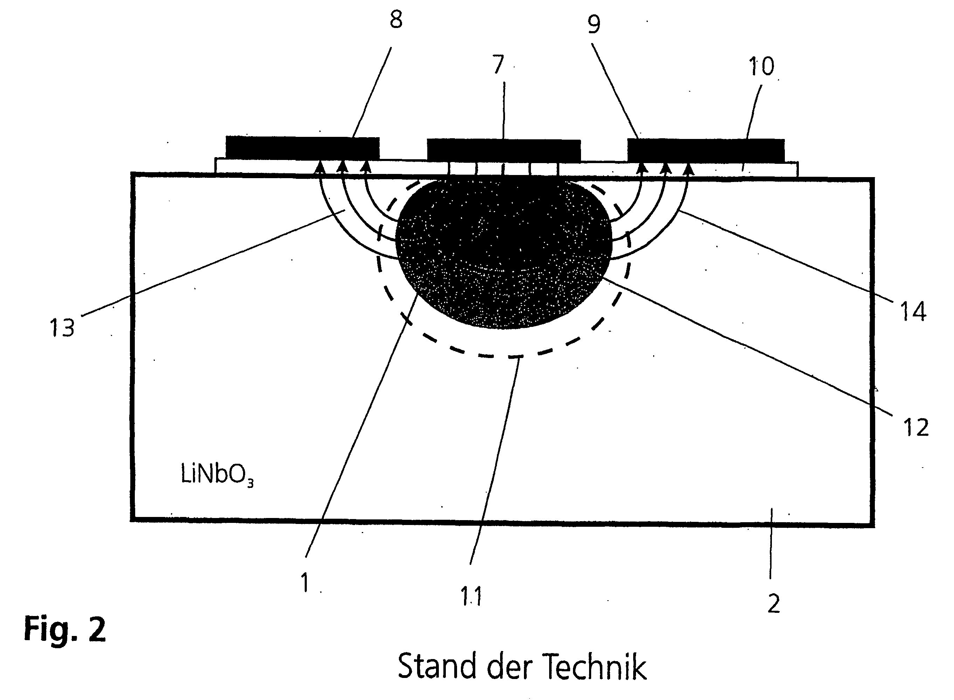

Eine derartige Vorrichtung ist aus der DE 195 14 823 C1 bekannt. Bei dieser Vorrichtung ist die Gitterstruktur aus wenigstens zwei in einem Abstand voneinander angeordneten Gitterabschnitten aufgebaut, zwischen denen sich Steuerabschnitte befinden, wobei die Elektroden in den Steuerabschnitten angeordnet sind (Figuren 1 und 2).

Mit der Unterteilung der Gitterstruktur in Gitterabschnitte sowie mit dem Einfügen von über eine elektrische Spannung beeinflußbaren Steuerabschnitten zwischen die Gitterabschnitte ist beabsichtigt, die zwischen der eingekoppelten Pumpwelle und einer erzeugten Oberwelle auftretende relative Phasenverschiebung, wie sie zum Beispiel infolge von Schwankungen von Fertigungsparametern auftreten kann, auszugleichen.

Der Erfindung liegt die Aufgabe zugrunde, eine Vorrichtung der eingangs genannten Art zu schaffen, die ein Vervielfachen von Lichtfrequenzen mit einem gegenüber bekannten Vorrichtungen noch größeren Konversionswirkungsgrad einer eingekoppelten Pumpwelle ermöglicht.

Diese Aufgabe wird erfindungsgemäß dadurch gelöst, dass die Gitterstruktur aus zumindest einem ersten Gitterabschnitt und einem an den ersten Gitterabschnitt unmittelbar angrenzenden zweiten Gitterabschnitt aufgebaut ist, wobei die Gitterstruktur den plattenförmigen Kristall von seiner Oberseite bis zu seiner Unterseite vollständig durchsetzt, und dass die Elektroden dem zweiten Gitterabschnitt zugeordnet sind, wobei zumindest eine der einem jeden Gitterabschnitt zugeordneten Elektroden kammförmig ausgebildet ist und auf der Oberseite des Kristalles so plaziert ist, dass deren Elektrodenfinger sich entlang der Inversionsbereiche erstrecken.

Eine vorteilhafte Ausführungsform sieht vor, dass der zweite Gitterabschnitt eine von der Gitterperiode des ersten Gitterabschnittes abweichende Gitterperiode aufweist.

Eine weitere bevorzugte Ausführungsform besteht darin, dass zumindest ein erster und ein angrenzender zweiter Gitterabschnitt einen Gitterbereich bilden und mehrere Gitterbereiche aneinandergereiht sind. Eine besonders vorteilhafte Ausführungsform sieht dabei vor, dass sich die Gitterperioden der ersten und/oder zweiten Gitterabschnitte von Gitterbereich zur Gitterbereich voneinander unterscheiden.

Eine vorzugsweise Ausführungsform besteht auch darin, dass der Kristall aus LiNbO₃ oder LiTaO₃ besteht.

Eine besonders bevorzugte Ausführungsform besteht ferner darin, dass sich die Gitterstruktur von einer Stirnseite bis zur anderen Stirnseite des Kristalles erstreckt.

Weitere zweckmäßige Ausgestaltungen der Erfindung sind Gegenstand weiterer Unteransprüche.

Die Erfindung wird nachstehend anhand von Ausführungsbeispielen und einer zugehörigen Zeichnung näher erläutert.

In der Zeichnung zeigen:
- Figur 1: den Längsschnitt einer Vorrichtung zum Vervielfachen von Lichtfrequenzen mit einem Wellenleiter und einer aus Gitterabschnitten und dazwischen liegenden Steuerabschnitten aufgebauten Gitterstruktur nach dem Stand der Technik,
- Figur 2: einen Querschnitt durch die Vorrichtung gemäß Figur 1 im Bereich eines Steuerabschnittes,
- Figur 3: eine erste erfindungsgemäße Vorrichtung zum Vervielfachen von Lichtfrequenzen im Längsschnitt,
- Figur 4: die Vorrichtung gemäß Figur 3 in Draufsicht,
- Figur 5: eine zweite erfindungsgemäße Vorrichtung zum Vervielfachen von Lichtfrequenzen im Längsschnitt,
- Figur 6: eine erfindungsgemäße Vorrichtung zum Vervielfachen von Lichtfrequenzen mit einer gegenüber dem Ausführungsbeispiel gemäß der Figuren 3 und 4 ersten abgeänderten Form und Anordnung von Elektroden,
- Figur 7: eine erfindungsgemäße Vorrichtung zum Vervielfachen von Lichtfrequenzen mit einer gegenüber dem Ausführungsbeispiel gemäß der Figuren 3 und 4 zweiten abgeänderten Form und Anordnung von Elektroden und
- Figur 8: eine dritte erfindungsgemäße Vorrichtung zum Vervielfachen von Lichtfrequenzen

Die in den Figuren 1 und 2 dargestellte bekannte Vorrichtung zum Vervielfachen von Lichtfrequenzen zeigt einen Wellenleiter 1, der in an sich bekannter Weise in eine Substrat 2 eingebracht ist. Als Substrat 2 dient ein ferroelektrischer Kristall, beispielsweise LiNbO₃ oder LiTaO₃. Im dargestellten Beispiel ist der Kristall in einer xy-Ebene im Z-Schnitt präpariert und der Wellenleiter 1 erstreckt sich entlang der y-Richtung von einem zum anderen Ende des Kristalls. Der Wellenleiter 1 quert dabei eine aus Gitterabschnitten 3 aufgebaute Gitterstruktur zur sogenannten Quasi-Phasensynchronisierung (QPS) einer in den Wellenleiter 1 eingekoppelten Pumpwelle und einer erzeugten Oberwelle doppelter Frequenz. Die Gitterabschnitte 3 bestehen dabei jeweils aus Inversionsbereichen 4 und Normalbereichen 5, wobei in den Normalbereichen 5 die Richtung der optischen z-Achsen parallel zu den z-Achsen des Wellenleiters 1 und des Substrates 2 in einer Normalrichtung ausgerichtet ist, in den Inversionsbereichen 4 hingegen die Richtung der z-Achsen gegenüber der Normalrichtung um 180 Grad invertiert ist. Zwischen den Gitterabschnitten 3 sind sich unmittelbar anschließende Steuerabschnitte 6 mit einer einem Vielfachen der Gitterperiode der Gitterabschnitte 3 entsprechenden Länge vorgesehen, in denen im Bereich des Wellenleiters 1 jeweils eine Mittelelektrode 7 und Außenelekroden 8,9 angeordnet sind.

Die hier zwischen die Gitterabschnitte 3 eingefügten Steuerabschnitte 6 gestatten durch Anlegen einer elektrischen Spannung zwischen die Mittelelektrode und die Außenelektroden 8,9 eine Abstimmung des spektralen Akzeptanzbereichs der aus den Gitterabschnitten 3 aufgebauten Gitterstruktur auf die Frequenz der Pumpwelle, die beispielsweise durch einen Halbleiterlaser erzeugt und über eine Einkoppellinse in den Wellenleiter 1 eingekoppelt ist. Infolge der angelegten Spannung und des damit im Kristall zwischen der Mittelelektrode 7 und den Außerielektroden 8,9 ausgebildeten elektrischen Feldes sind die effektiven Brechzahlen für die Pumpwelle einerseits und die Oberwelle andererseits verschieden geändert, so dass in Abhängigkeit von der angelegten Spannung die relative Phase zwischen der Pumpwelle und der Oberwelle steuerbar und auf die Phasenanpaßbedingung vor Eintritt in einen nachfolgenden Gitterabschnitt 3 anpaßbar sind. Auf diese Weise ist es möglich, einen Abstimmbereich von einigen Nanometern zu erreichen, so dass Schwankungen in der Frequenz der Pumpwelle über diesen Bereich hinsichtlich der Erhaltung des Konversionswirkungsgrades in gewisser Weise ausgleichbar sind. Figur 2 ist des weiteren zu entnehmenm, dass zwischen den Elektroden 7, 8, 9 und dem Substrat 2 eine optische Isolierschicht 10 angeordnet ist. Diese Isolierschicht 10 dient der Vermeidung von Lichtabsorption durch die Elektroden 7, 8, 9.

Außerdem zeigt Figur 2 die elektrischen Felder einer Pumpwelle 11 und einer erzeugten Oberwelle 12 mit doppelter Frequenz, die im Wellenleiter 1 geführt sind, sowie einige elektrische Feldlinien 13, 14 zwischen der Mittelelektrode 7 und den Außenelektroden 8,9. Daber ist erkennbar, dass aufgrund der unterschiedlichen Eindringtiefen der Pumpwelle 11 und der Oberwelle 12 von der den Elektroden 7, 8, 9 zugewandten Oberseite in den Wellenleiter 1 bzw. das Substrat 2 die Oberwelle 12 einen viel größeren effektiven Überlapp mit dem elektrischen Feld im Bereich hoher Feldstärke aufweist als die Pumpwelle 11, so dass sie auch eine viel größere Brechzahländerung erfährt.

Die bekannte Vorrichtung hat jedoch folgende Nachteile: Die Steuerabschnitte 6 weisen keine periodische Domänenstruktur auf und tragen somit nicht unmittelbar zur Generierung einer Oberwelle (SHG-Welle) bei. Dadurch ist die generierte Intensität der SHG-Welle kleiner als es bei Ausnutzung der gesamten Wellenleiterlänge prinzipiell möglich wäre. Außerdem vermindert die fehlende periodische Domänenstruktur, das heißt, das Fehlen der Gitterstruktur in diesen Steuerabschnitten 6 die Resistenz des optischen Wellenleiters gegenüber optical-damage, was die Stabilität der SHG-Welle beinträchtigen kann. Eine gleichzeitige Generierung von unterschiedlichen Wellenlängen ist bei der bekannten Vorrichtung unmöglich. Außerdem reicht die gesamte QPS-Struktur nicht bis zu den Enden des Kristallplättchens, wodurch Wechselwirkungslänge verloren geht und die Resistenz gegen optical-damage in diesen Bereichen vermindert ist.

Diese Nachteile werden bei den nachfolgend beschriebenen erfindungsgemäßen Vorrichtungen vermieden.

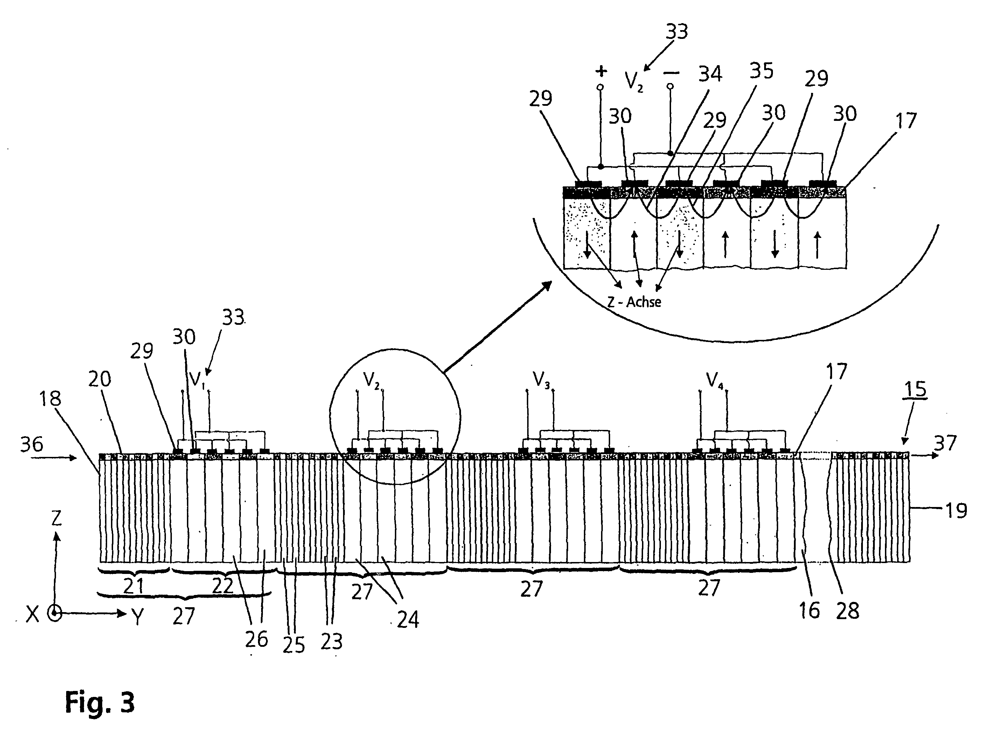

In Figur 3 ist eine erste erfindungsgemäße Vorrichtung 15 zum Vervielfachen von Lichtfrequenzen im Längsschnitt dargestellt. Als Substrat dient auch hierbei ein ferroelektrischer Kristall 16, beispielsweise aus LiNbO₃ oder LiTaO_{3.} Der plattenförmige ferroelektrische Kristall 16 ist in z-Richtung geschnitten und weist einen optischen Wellenleiter 17 auf, der sich zwischen zwei Stirnflächen 18,19 entlang der Oberseite 20 des Kristalls 16 in der xy-Ebene in y-Richtung erstreckt. Der Wellenleiter 17 quert dabei eine aus ersten und zweiten Gitterabschnitten 21 und 22 aufgebaute Gitterstruktur. Die ersten und zweiten Gitterabschnitte 21 und 22 bestehen jeweils aus Inversionsbereichen 23 und 24 und Normalbereichen 25 und 26, wobei in den Normalbereichen 25, 26 die Richtung der optischen z-Achse parallel zu den z-Achsen des Wellenleiters 17 und Kristalles 16 in einer Normalrichtung ausgerichtet, in den Inversionsbereichen 23, 24 hingegen die Richtung der z-Achsen gegenüber der Normalrichtung um 180 Grad invertiert ist.

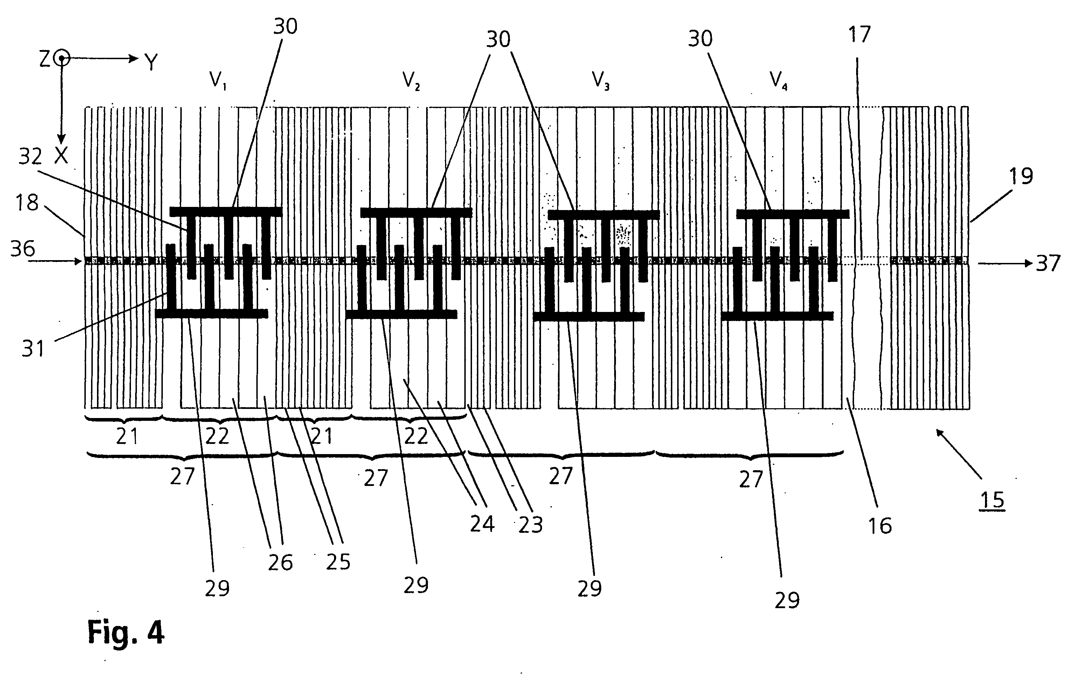

Im in den Figuren 3 und 4 dargestellten Beispiel bilden der erste und der unmittelbar angrenzende zweite Gitterabschnitt 21 und 22 einen Gitterbereich 27, wobei mehrere derartige Gitterbereiche 27 aneinandergereiht sind. Die Gitterstruktur erstreckt sich dabei von der einen Stirnseite 18 bis zur anderen Stirnseite 19 des Kristalles 16 und durchsetzt diesen von seiner Oberseite 20 bis zu seiner Unterseite 28 vollständig. Jeden zweiten Gitterabschnitt 22 ist ein Paar von kammförmig ausgebildeten Elektroden 29, 30 zugeordnet, die auf der Oberseite 20 des Kristalles 16 angeordnet sind. Die eine Elektrode 29 des Elektrodenpaares ist dabei so plaziert, dass deren Elektrodenfinger 31 sich in x-Richtung entlang der Inversionsbereiche 24 des zweiten Gitterabschnittes 22 erstrecken. Die der Elektrode 29 gegenüberliegende andere Elektrode 30 des Elektrodenpaares ist hingegen so angeordnet, dass deren Elektrodenfinger 32 sich in x-Richtung entlang der Normalbereiche 26 erstrecken. Die Elektrodenfinger 31 und 32 der beiden Elektroden 29, 30 sind dabei so lang, dass sie ineinandergreifend den Wellenleiter 17 in seiner Breite überragen. In ihrer Breite sind die Elektrodenfinger 31, 32 jeweils schmaler ausgebildet als die Normalbereiche 26 und die Inversionsbereiche 24 jeweils in y-Richtung ausgedehnt sind. Vorzugsweise sind die Elektrodenfinger 31, 32 auf den Inversions- bzw. Normalbereichen 24, 26 in Gitterlinienrichtung jeweils mittig angeordnet. Die Elektroden 29, 30 können aus dünnen Metallschichten, aber auch aus einem optisch transparenten elektrisch leitfähigen Material, zum Beispiel ITO, hergestellt sein. Im ersteren Fall ist zwischen den Elektroden 29, 30 und der Oberseite 20 des Kristalles 16 eine in der Zeichnung nicht dargestellte optisch isolierende Schicht, beispielsweise aus SiO₃, vorzusehen, um eine Lichtabsorption durch die Metallschicht zu verhindern.

Die den zweiten Gitterabschnitten 22 zugeordneten Elektroden 29, 30 sind jeweils mit einer Spannungsquelle 33 verbunden. Im Beispiel gemäß Figur 3 weist der zweite Gitterabschnitt 22 eine von der Gitterperiode des ersten Gitterabschnittes 21 abweichende Gitterperiode auf. Sowohl die eine als auch die andere Gitterperiode sind dabei so gewählt, dass in beiden Gitterabschnitten 21, 22 eine Quasi-Phasensynchronisierung (QPS) für die Pump-Wellenlänge des Lasers gewährleistet ist. Das kann zum Beispiel eine QPS erster Ordnung (m = 1 im Gitterabschnitt 21) kombiniert mit einer QPS dritter Ordnung (m = 3 im Gitterabschnitt 22) sein.

Wie in der Einzelheit zu Figur 3 dargestellt verlaufen die in der Zeichnung mit 34 und 35 bezeichneten elektrischen Feldlinien in Abhängigkeit von der Polarisation der an den Elektroden 29, 30 angelegten elektrischen Spannung V so, dass sie in allen Bereichen des zweiten Gitterabschnittes 22, das heißt sowohl in den Inversionsbereichen 24 als auch in den Normalbereichen 26, entweder die gleiche Ausrichtung wie die z-Achse haben oder aber entgegen der z-Achse orientiert sind. Das bedeutet, dass das elektrische Feld in allen Inversions- und Normalbereichen 24, 26 des zweiten und damit gesteuerten Gitterabschnittes 22 die gleiche Brechzahländerung verursacht, so dass die einzelnen Phasenbeiträge sich von Gitterlinie zu Gitterlinie addieren. Infolge der Dispersion ist jedoch die Brechzahländerung für die Pumpwelle 36 zum einen und für die Oberwelle (SHG-Welle) 37 zum anderen unterschiedlich, was letztlich ihre Phasenanpassung ermöglicht. Das heißt, mit der Höhe der elektrischen Spannung V können die Phasen der wechselwirkenden Wellen so eingestellt werden, dass die SHG-Welle weiter in den Gitterabschnitten 21 (QPS - Bereiche erster Ordnung) konstruktiv aufgebaut wird. Gleichzeitig wird die harmonische Welle in den Gitterabschnitten 22 verstärkt, da dort die QPS-Bedingung dritter Ordnung erfüllt ist. Tritt eine Veränderung in der Wellenlänge des Pumplasers auf oder gibt es eine herstellungsbedingte Inhomogenität in der Gitterstruktur, so kann durch eine in ihrer Höhe entsprechend veränderte Spannung V wieder eine kohärente Addition der Beiträge der einzelnen Gitterabschnitte 21, 22 erreicht werden.

Die den zweiten Gitterabschnitten 22 zugeordneten Elektroden 29, 30 können entweder mit gleichen Spannungen V oder aber auch mit verschiedenen Spannungen V₁ bis Vₙ entsprechend der Anzahl n der aneinandergereihten Gitterbereiche 27 beaufschlagt werden. So können beispielsweise durch Herstellungstoleranzen entstandene Fluktuationen in den effektiven Brechzahlen der geführten Moden entlang des Wellenleiters 17 mit Hilfe unterschiedlicher Spannungen, die auch unterschiedliche Phasenänderungen verursachen, kompensiert werden.

Während im Ausführungsbeispiel gemäß der Figuren 3 und 4 mehrere Gitterbereiche 27 aneinandergereiht sind, ist es auch denkbar und liegt im Rahmen der Erfindung, lediglich einen einzigen solchen Gitterbereich 27 vorzusehen, der dann zumindest einen Gitterabschnitt 21 ohne Elektroden und einen Gitterabschnitt 22 mit zugeordneten Elektroden 29, 30 aufweist. Die minimale Länge eines jeden Gitterabschnittes 21 bzw. 22 beträgt jeweils eine Gitterperiode. Die einzige Bedingung, die die Gitterstruktur in den einzelnen Gitterabschnitten 21, 22 erfüllen muß, ist, dass ihre Gitterperiode für eine entsprechende Pumpwellenlänge Quasi-Phasensynchronisation einer bestimmten Ordnung m gewährleisten.

Dies bedeutet, dass die Gitterperiode sowohl in den Gitterabschnitten 21 als auch in den Gitterabschnitten 22 gleich sein oder aber auch, wie in den Figuren 3 und 4 dargestellt und unter der vorgenannten Bedingung, die Gitterperiode der zweiten Gitterabschnitte 22 von der Gitterperiode der ersten Gitterabschnitte 21 abweichen kann. Sind die Inversions- und Normalbereiche 24 und 26 der zweiten Gitterabschnitte 22 in Wellenleiter- bzw. Lichtausbreitungsrichtung breiter als die Inversions- und Normalbereiche 23, 25-der ersten. Gitterabschnitte 21, so hat dies den Vorteil, dass in diesem Fall auch die Elektroden 29, 30 größere Abmessungen haben können und somit einfacher herzustellen und auszurichten sind.

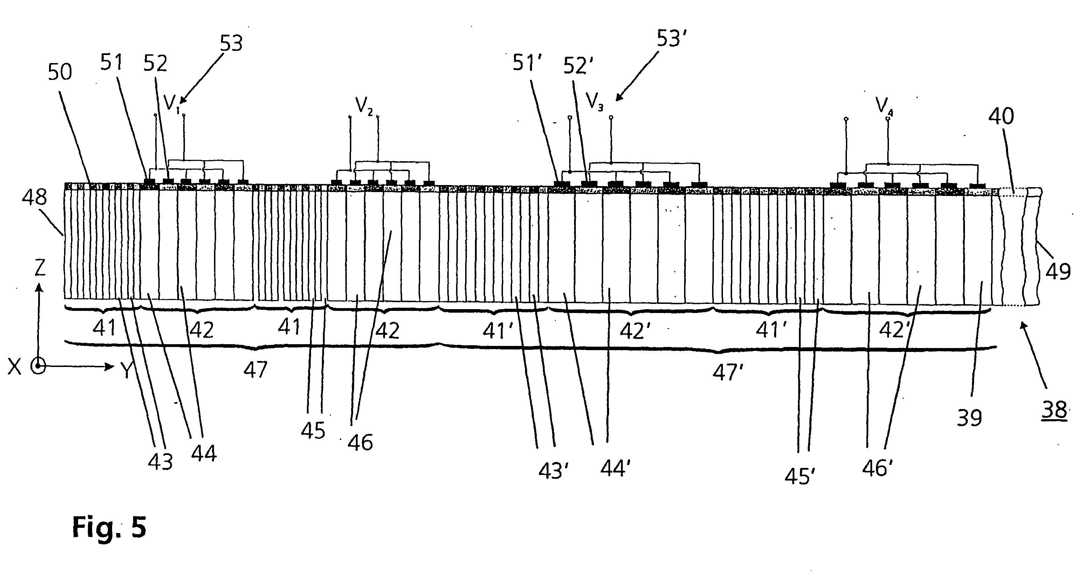

Eine interessante andere, weil zur gleichzeitigen Verdopplung bzw. Vervielfachung von mehreren Wellenlängen eines Pumplasers geeignete Vorrichtung 38 zeigt Figur 5. Als Substrat dient auch hier ein in z-Richtung geschnittener ferroelektrischer Kristall 39, der einen optischen Wellenleiter 40 aufweist. Der sich in der xy-Ebene in y-Richtung erstreckende Wellenleiter 40 quert dabei zunächst alternierend eine aus ersten Gitterabschnitten 41 und zweiten Gitterabschnitten 42 aufgebaute Gitterstruktur, wobei die ersten Gitterabschnitte 41 jeweils eine erste Gitterperiode mit Inversionsbereichen 43 und Normalbereichen 45 und die zweiten Gitterabschnitte 42 jeweils eine zweite Gitterperiode mit Inversionsbereichen 44 und Normalbereichen 46 aufweisen. Die in Figur 5 dargestellten zwei ersten und zwei zweiten Gitterabschnitte 41 und 42 bilden einen Gitterbereich 47. Im unmittelbaren Anschluß an diesen Gitterbereich 47 quert der Wellenleiter 40 einen Gitterbereich 47', der sich wiederum alternierend aus ersten Gitterabschnitten 41' und zweiten Gitterabschnitten 42' zusammensetzt, wobei die ersten Gitterabschnitte 41' mit ihren Inversionsbereichen 43' und Normalbereichen 45' ebenso eine von der Gitterperiode der ersten Gitterabschnitte 41 des Gitterbereiches 47 abweichende Gitterperiode aufweisen wie die zweiten Gitterabschnitte 42' mit ihren Inversionsbereichen 44' und Normalbereichen 46' gegenüber den zweiten Gitterabschnitten 42 des Gitterbereiches 47. Der sich im Beispiel gemäß Figur 5 von einer Stirnseite 48 bis zur gegenüberliegenden Stirnseite 49 entlang der Oberseite 50 des plattenförmigen Kristalles 39 erstreckende optische Wellenleiter 40 muß so ausgebildet sein, dass er Licht der entspechenden Wellenlängen zu führen vermag.

Die elektro-optische Steuerung erfolgt hier über den zweiten Gitterabschnitten 42 bzw. 42' zugeordnete Elektroden 51, 52 bzw. 51', 52', die jeweils an Spannungsquellen 53 bzw. 53' angeschlossen sind. Die Elektrodenpaare 51, 52 bzw. 51', 52' können dabei die nämliche Form und Anordnung haben wie beim Ausführungsbeispiel gemäß Figuren 3 und 4 beschrieben.

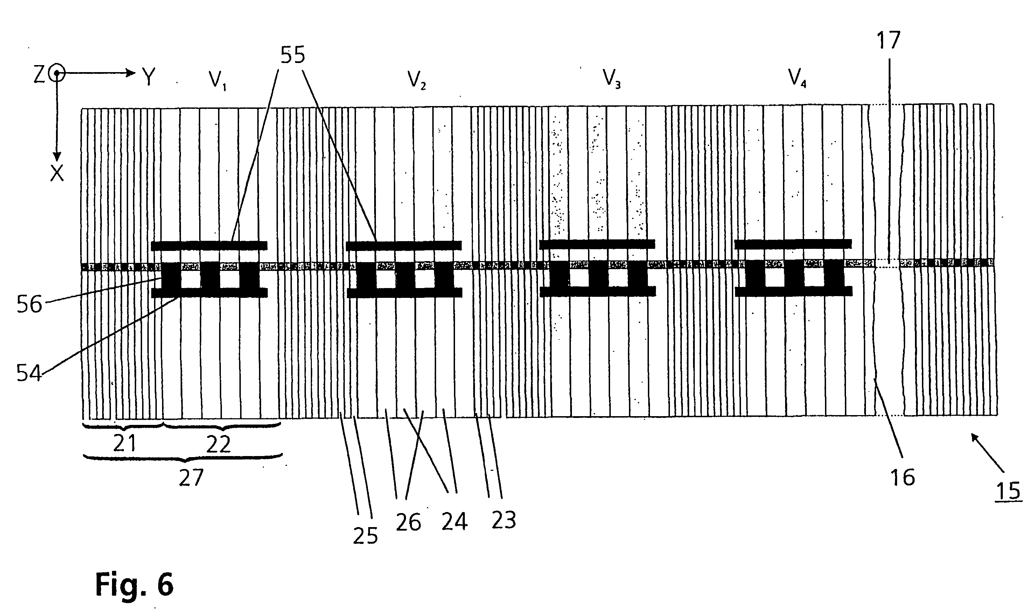

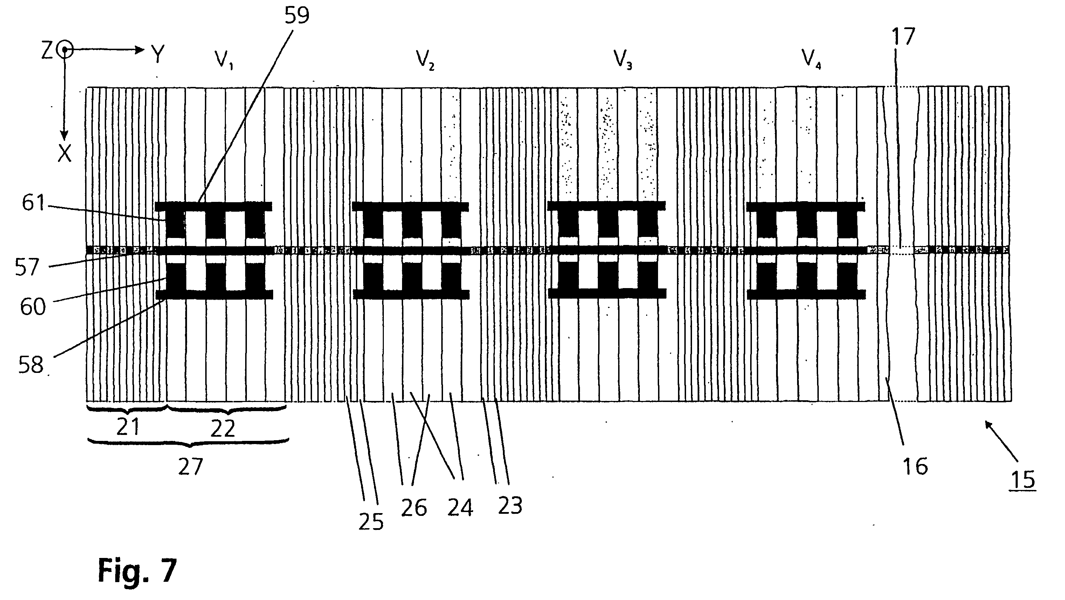

Für in z-Richtung geschnittene Kristalle sind aber auch andere Formen und Anordnungen der den zweiten Gitterabschnitten zugeordneten Elektroden denkbar. Die Figuren 6 und 7 zeigen zwei mögliche Varianten.

So ist beim Ausführungsbeispiel gemäß Figur 6 eine Elektrode 54 des dem zweiten Gitterabschnitt 22 zugeordneten Elektrodenpaares kammförmig, die zweite Elektrode 55 hingegen streifenförmig ausgebildet. Die kammförmige Elektrode 54 ist dabei auf der Oberseite 20 des Kristalles 16 so plaziert, dass deren Elektrodenfinger 56 sich in x-Richtung entlang der Inversionsbereiche 24 erstrecken und den Wellenleiter 17 in seiner Breite überdecken. Die streifenförmige Elektrode 55 ist auf der Oberseite 20 des Kristalles 16 und zwar auf der anderen Seite des Wellenleiters 17 und in einem Abstand sowie parallel zum Wellenleiter 17 angeordnet. Eine weitere, in der Zeichnung nicht dargestellte Variante sieht vor, dass jedem zweiten Gitterabschnitt. 22 eine Elektrodenpaar zugeordnet ist, wobei eine Elektrode kammförmig ausgebildet und auf der Oberseite 20 des Kristalles 16 so plaziert ist, dass deren Elektrodenfinger sich in x-Richtung entlang der Inversionsbereiche 24 erstrecken und in einem Abstand vom Wellenleiter 17 enden, und wobei die zweite Elektrode streifenförmig ausgebildet und auf der Oberseite 20 des Kristalles 16 in Längsrichtung des Wellenleiters 17 und denselben überdeckend angeordnet ist.

Bei der Variante gemäß Figur 7 sind jedem zweiten Gitterabschnitt 22 eine Mittelelektrode 57 und zwei Außenelektroden 58, 59 zugeordnet. Die Mittelelektrode 57 ist streifenförmig ausgebildet und auf der Oberseite 20 des Kristalles 16 mittig in Längsrichtung des Wellenleiters 17 und denselben überdeckend angeordnet. Die Außenelektroden 58, 59 weisen beide eine Kammform auf und sind auf der Oberseite 20 des Kristalles 16 beiderseits des Wellenleiters 17 so plaziert, dass deren Elektrodenfinger 60, 61 sich in x-Richtung entlang der Inversionsbereiche erstrecken und in einem Abstand vom Wellenleiter 17 enden.

In den drei vorstehend beschriebenen Fällen wird jeweils die zur z-Achse parallele Komponente des zwischen den Elektroden aufgebauten elektrischen Feldes zur elektro-optischen Steuerung genutzt.

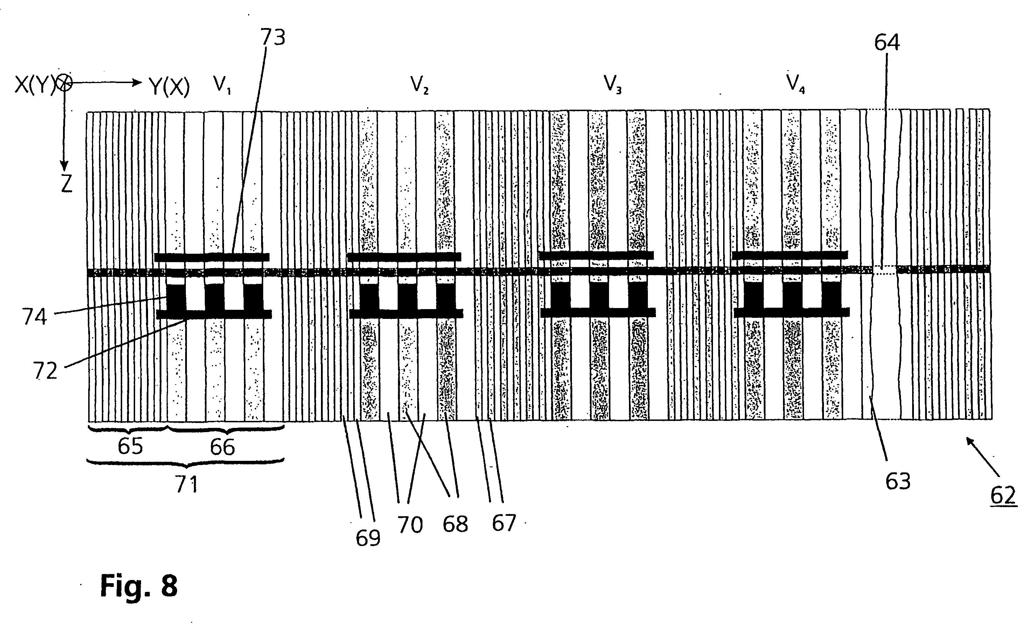

Figur 8 zeigt eine erfindungsgemäße Vorrichtung 62 zum Verdoppeln bzw. Vervielfachen von Lichtfrequenzen, bei der ein in x- oder in y-Richtung geschnittener Kristall 63 Verwendung findet und sich ein optischer Wellenleiter 64 in der yz-Ebene in y-Richtung oder in der xz-Ebene in x-Richtung erstreckt. Der Wellenleiter 64 quert auch hierbei eine aus ersten und zweiten Gitterabschnitten 65, 66 aufgebaute Gitterstruktur, wobei diese Gitterabschnitte 65, 66 jeweils aus Inversionsbereichen 67, 68 und aus Normalbereichen 69, 70 bestehen. Im Unterschied zu den vorbeschriebenen Vorrichtungen 15 und 38 verlaufen die von den Inversions- und Normalbereichen 67 bis 70 gebildeten Gitterlinien hier jedoch nicht in x- sondern in z-Richtung. Im übrigen bilden die ersten und zweiten Gitterabschnitte 65 und 66 auch hier einen Gitterbereich 71, von denen wiederum mehrere aneinandergereiht sind. Den zweiten Gitterabschnitten 66 ist jeweils ein Elektrodenpaar zugeordnet, wobei eine Elektrode 72 kammförmig und die zweite Elektrode 73 streifenförmig ausgebildet ist. Die kammförmige Elektrode 72 ist auf der Oberseite des Kristalles 63 so plaziert, dass deren Elektrodenfinger 74 sich in z-Richtung entlang der Inversionsbereiche 68 erstrecken und in einem Abstand vom Wellenleiter 64 enden. Die streifenförmige Elektrode 73 ist auf der gegenüberliegenden Seite des Wellenleiters 64 in einem Abstand sowie parallel zu diesem angeordnet. Die Positionierung der einen Elektrode 72 auf der einen Seite und der anderen Elektrode 73 auf der anderen Seite des Wellenleiters 64 hat zur Folge, dass beim Anlegen einer Spannung an die Elektroden 72, 73 hierbei die horizontale Komponente des aufgebauten elektrischen Feldes für eine Brechzahländerung genutzt wird.

Mit den vorbeschriebenen Vorrichtungen 15, 38 und 62 gelingt eine hocheffiziente Verdopplung bzw. Vervielfachung der Frequenz von Licht, insbesondere von Laserlicht.

## Patentansprüche

1. Vorrichtung zum Vervielfachen von Lichtfrequenzen, insbesondere von Laserlicht, mit einem optisch nichtlinearen Element, das aus einem plattenförmigen ferroelektrischen Kristall hergestellt ist und das über eine Gitterstruktur mit Normalbereichen und Inversionsbereichen verfügt, wobei in den Inversionsbereichen die Richtung der spontanen Polarisation gegenüber einer Normalrichtung in den Normalbereichen invertiert ist, und mit Elektroden zum Erzeugen eines elektrischen Feldes sowie mit einem optischen Wellenleiter, der sich zwischen zwei Stirnseiten des plattenförmigen Kristalles entlang dessen Oberseite erstreckt und dabei die Gitterstruktur quert,
**dadurch gekennzeichnet,**
**dass** die Gitterstruktur aus zumindest einem ersten Gitterabschnitt (21; 41; 65) und einem an den ersten Gitterabschnitt (21; 41; 65) unmittelbar angrenzenden zweiten Gitterabschnitt (22; 42; 66) aufgebaut ist, wobei die Gitterstruktur den plattenförmigen Kristall (16; 39; 63) von seiner Oberseite (20) bis zu seiner Unterseite (28) vollständig durchsetzt, und dass die Elektroden (29, 30; 51, 52; 54, 55; 58, 59; 72, 73) dem zweiten Gitterabschnitt (22; 42; 66) zugeordnet sind, wobei zumindest eine der einem jeden zweiten Gitterabschnitt (22; 42; 66) zugeordneten Elektroden (29, 30; 51, 52; 54; 58, 59; 72) kammförmig ausgebildet und auf der Oberseite (20) des Kristalles (16; 39; 63) so plaziert ist, dass deren Elektrodenfinger (56; 60, 61; 74) sich entlang der Inversionsbereiche (24; 68) erstrecken.

2. Vorrichtung nach Anspruch 1,
**dadurch gekennzeichnet,**
**dass** der zweite Gitterabschnitt (22; 42; 66) eine von der Gitterperiode des ersten Gitterabschnittes (21; 41; 65) abweichende Gitterperiode aufweist.

3. Vorrichtung nach Anspruch 1 oder 2,
**dadurch gekennzeichnet,**
**dass** zumindest ein erster und ein angrenzender zweiter Gitterabschnitt (21, 22; 41, 42; 65, 66) einen Gitterbereich (27; 47; 71) bilden und mehrere Gitterbereiche (27; 47; 71) vorgesehen sind.

4. Vorrichtung nach Anspruch 3,
**dadurch gekennzeichnet,**
**dass** sich die Gitterperioden der ersten und/oder zweiten Gitterabschnitte (41, 41', 42, 42') von Gitterbereich (47) zu Gitterbereich (47') voneinander unterscheiden.

5. Vorrichtung nach einem der Ansprüche 1 bis 4,
**dadurch gekennzeichnet,**
**dass** der Kristall (16; 39; 63) aus LiNbO₃ oder LiTaO₃ besteht.

6. Vorrichtung nach einem der Ansprüche 1 bis 5,
**dadurch gekennzeichnet,**
**dass** sich die Gitterstruktur von einer Stirnseite (18; 48) bis zur anderen Stirnseite (19; 49) des Kristalles (16, 39; 63) erstreckt.

7. Vorrichtung nach einem der Ansprüche 1 bis 6,
**dadurch gekennzeichnet,**
**dass** der Kristall (16; 39) in z-Richtung geschnitten ist und sich der Wellenleiter (17; 40) in der xy-Ebene in y-Richtung erstreckt.

8. Vorrichtung nach Anspruch 7,
**dadurch gekennzeichnet,**
**dass** jedem zweiten Gitterabschnitt (22) ein Paar kammförmig ausgebildete Elektroden (29, 30) zugeordnet ist, wobei die eine Elektrode (30) des Elektrodenpaares auf der Oberseite (26) des Kristalles (16) so plaziert ist, dass deren Elektrodenfinger (32) sich in x-Richtung entlang der Normalbereiche (26) des zweiten Gitterabschnittes (22) erstrecken, und die andere Elektrode (29) des Elektrodenpaares auf der Oberseite (20) des Kristalles (16) so plaziert ist, dass deren Elektrodenfinger (31) sich in x-Richtung entlang der Inversionsbereiche (24) des zweiten Gitterabschnittes (22) erstrecken, und wobei die Elektrodenfinger (31, 32) der beiden Elektroden (29, 30) so lang sind, dass sie ineinandergreifend den Wellenleiter (17) in seiner Breite überragen, und wobei die Elektrodenfinger (31, 32) der beiden Elektroden (29, 30) jeweils schmaler ausgebildet sind als die Inversions- und Normalbereiche (24, 26) in y-Richtung ausgedehnt sind

9. Vorrichtung nach Anspruch 8,
**dadurch gekennzeichnet,**
**dass** die Elektrodenfinger (31, 32) auf den Inversions- und Normalbereichen (24, 26) in Gitterlinienrichtung jeweils mittig angeordnet sind.

10. Vorrichtung nach Anspruch 7,
**dadurch gekennzeichnet,**
**dass** jedem zweiten Gitterabschnitt (22) ein Elektrodenpaar zugeordnet ist und dass eine Elektrode (54) des Elektrodenpaares kammförmig ausgebildet und auf der Oberseite (20) des Kristalls (16) so plaziert ist, dass deren Elektrodenfinger (56) sich in x-Richtung entlang der Inversionsbereiche (24) erstrecken und den Wellenleiter (17) in seiner Breite überdecken und dass die zweite Elektrode (55) des Elektrodenpaares streifenförmig ausgebildet und auf der Oberseite (20) des Kristalles (16) in einem Abstand vom Wellenleiter (17) sowie parallel zu diesem angeordnet ist.

11. Vorrichtung nach Anspruch 7,
**dadurch gekennzeichnet,**
**dass** jedem zweiten Gitterabschnitt (22) ein Elektrodenpaar zugeordnet ist und dass eine Elektrode des Elektrodenpaares kammförmig ausgebildet und auf der Oberseite (20) des Kristalles (16) so plaziert ist, dass deren Elektrodenfinger sich in x-Richtung entlang der Inversionsbereiche (24) erstrecken und in einem Abstand vom Wellenleiter (17) enden und dass die zweite Elektrode des Elektrodenpaares streifenförmig ausgebildet und auf der Oberseite (20) des Kristalles (16) in Längsrichtung des Wellenleiters (17) und denselben überdeckend angeordnet ist.

12. Vorrichtung nach Anspruch 7,
**dadurch gekennzeichnet,**
**dass** jedem zweiten Gitterabschnitt (22) zwei Außenelektroden (58, 59) und eine Mittelelektrode (57) zugeordnet sind, und dass die Mittelelektrode (57) streifenförmig ausgebildet und auf der Oberseite (20) des Kristalles (16) mittig in Längsrichtung des Wellenleiters (17) und denselben überdeckend angeordnet ist und dass die Außenelektroden (58, 59) kammförmig ausgebildet und auf der Oberseite (20) des Kristalles (16) beiderseits des Wellenleiters (17) so plaziert sind, dass deren Elektrodenfinger (60, 61) sich in x-Richtung entlang der Inversionsbereiche (24) erstrecken und in einem Abstand vom Wellenleiter (17) enden.

13. Vorrichtung nach einem der Ansprüche 1 bis 6,
**dadurch gekennzeichnet,**
**dass** der Kristall (63) in x-Richtung geschnitten ist und sich der Wellenleiter (64) in der yz-Ebene in y-Richtung erstreckt oder dass der Kristall (63) in y-Richtung geschnitten ist und sich der Wellenleiter (64) in der xz-Ebene in x-Richtung erstreckt.

14. Vorrichtung nach Anspruch 13,
**dadurch gekennzeichnet,**
**dass** jedem zweiten Gitterabschnitt (66) ein Elektrodenpaar zugeordnet ist und dass eine Elektrode (72) des Elektrodenpaares kammförmig ausgebildet und auf der Oberseite des Kristalles (63) so plaziert ist, dass deren Elektrodenfinger (74) sich in z-Richtung entlang der Inversionsbereiche (68) erstrecken und in einem Abstand vom Wellenleiter (64) enden und dass die zweite Elektrode (73) des Elektrodenpaares streifenförmig ausgebildet und auf der Oberseite des Kristalles (63) auf der gegenüberliegenden Seite des Wellenleiters (64) in einem Abstand sowie parallel zu diesem angeordnet ist.

15. Vorrichtung nach einem der Ansprüche 1 bis 14,
**dadurch gekennzeichnet,**
**dass** die Elektroden (29, 30; 51, 52; 54, 55; 58, 59, 60; 72, 73) aus Metall bestehen und zwischen den Elektroden (29, 30; 51, 52; 54, 55; 58, 59, 60; 72, 73) und dem Kristall (16; 39; 63) eine optisch transparente Isolierschicht vorgesehen ist.

16. Vorrichtung nach einem der Ansprüche 1 bis 14,
**dadurch gekennzeichnet,**
**dass** die Elektroden (29, 30; 51, 52; 54, 55; 58, 59, 60; 72, 73) aus einem optisch transparenten, elektrisch leitfähigen Material bestehen.

17. Vorrichtung nach einem der Ansprüche 1 bis 16,
**dadurch gekennzeichnet,**
**dass** die den zweiten Gitterabschnitten (22; 42; 66) zugeordneten Elektroden (29, 30; 51, 52; 54, 55; 58, 59, 60; 72, 73) mit unterschiedlichen elektrischen Spannungen (V₁, V₂, V₃,... Vₙ) beaufschlagbar sind.

## Claims

1. Device for multiplying light frequencies, in particular laser light, with an optically non-linear element, which is produced from a plate-shaped ferroelectric crystal and which has a grating structure with normal regions and inversion regions, wherein in the inversion regions, the direction of spontaneous polarisation is inverted relative to a normal direction in the normal regions, and with electrodes for generation of an electric field and also with an optical waveguide, which extends between two faces of the plate-shaped crystal along the upper side thereof and thus crosses the grating structure,
**characterised in that**
the grating structure is composed from at least a first grating section (21; 41; 65) and a second grating section (22; 42; 66) directly adjoining the first grating section (21; 41; 65), wherein the grating structure passes completely through the plate-shaped crystal (16; 39; 63) from its upper side (20) to its underside (28), and that the electrodes (29, 30; 51, 52; 54, 55; 58, 59; 72, 73) are assigned to the second grating section (22; 42; 66), wherein at least one of the electrodes (29, 30; 51, 52; 54; 58, 59; 72) assigned to each second grating section (22; 42; 66) is configured in a comb shape and is positioned on the upper side (20) of the crystal (16; 39; 63) so that its electrode fingers (56; 60, 61; 74) extend along the inversion regions (24; 68).

2. Device according to Claim 1, **characterised in that** the second grating section (22; 42; 66) has a grating period differing from the grating period of the first grating section (21; 41; 65).

3. Device according to Claim 1 or 2, **characterised in that** at least a first and an adjoining second grating section (21, 22; 41, 42; 65, 66) form a grating region (27; 47; 71) and several grating regions (27; 47; 71) are provided.

4. Device according to Claim 3, **characterised in that** the grating periods of the first and/or second grating sections (41, 41', 42, 42') differ from one another from grating region (47) to grating region (47').

5. Device according to one of Claims 1 to 4, **characterised in that** the crystal (16; 39; 63) is made of LiNbO₃ or LiTaO₃.

6. Device according to one of Claims 1 to 5, **characterised in that** the grating structure extends from one face (18; 48) to the other face (19; 49) of the crystal (16, 39; 63).

7. Device according to one of Claims 1 to 6, **characterised in that** the crystal (16; 39) is cut in z-direction and the waveguide (17; 40) extends in y-direction in the xy-plane.

8. Device according to Claim 7, **characterised in that** a pair of electrodes (29, 30) configured in a comb shape is assigned to each second grating section (22), wherein one electrode (30) of the electrode pair is positioned on the upper side (26) of the crystal (16) so that its electrode fingers (32) extend in x-direction along the normal regions (26) of the second grating section (22), and the other electrode (29) of the electrode pair is positioned on the upper side (20) of the crystal (16) so that its electrode fingers (31) extend in x-direction along the inversion regions (24) of the second grating section (22), and wherein the electrode fingers (31, 32) of the two electrodes (29, 30) are so long that when intermeshed they project above the waveguide (17) on its width, and wherein the electrode fingers (31, 32) of the two electrodes (29, 30) are respectively narrower than the extension of the inversion and normal regions (24, 26) in y-direction.

9. Device according to Claim 8, **characterised in that** the electrode fingers (31, 32) are respectively arranged centrally on the inversion and normal regions (24, 26) in the direction of the grating rulings.

10. Device according to Claim 7, **characterised in that** one electrode pair is assigned to each second grating section (22), and that one electrode (54) of the electrode pair is configured in a comb shape and is positioned on the upper side (20) of the crystal (16) so that its electrode fingers (56) extend in x-direction along the inversion regions (24) and cover the waveguide (17) on its width, and that the second electrode (55) of the electrode pair is configured in the form of a strip and is arranged on the upper side (20) of the crystal (16) at a distance from the waveguide (17) and also parallel to this.

11. Device according to Claim 7, **characterised in that** one electrode pair is assigned to each second grating section (22), and that one electrode of the electrode pair is configured in a comb shape and is positioned on the upper side (20) of the crystal (16) so that its electrode fingers extend in x-direction along the inversion regions (24) and terminate at a distance from the waveguide (17), and that the second electrode of the electrode pair is configured in the form of a strip and is arranged on the upper side (20) of the crystal (16) in the longitudinal direction of the waveguide (17) and so as to cover this.

12. Device according to Claim 7, **characterised in that** two outer electrodes (58, 59) and one central electrode (57) are assigned to each second grating section (22), and that the central electrode (57) is configured in the form of a strip and is arranged on the upper side (20) of the crystal (16) in the centre in the longitudinal direction of the waveguide (17) and covering this, and that the outer electrodes (58, 59) are configured in a comb shape and are positioned on the upper side (20) of the crystal (16) on both sides of the waveguide (17) so that their electrode fingers (60, 61) extend in x-direction along the inversion regions (24) and terminate at a distance from the waveguide (17).

13. Device according to one of Claims 1 to 6, **characterised in that** the crystal (63) is cut in x-direction and the waveguide (64) extends in y-direction in the yz-plane, or that the crystal (63) is cut in y-direction and the waveguide (64) extends in x-direction in the xz-plane.

14. Device according to Claim 13, **characterised in that** a pair of electrodes is assigned to each second grating section (66), and that one electrode (72) of the electrode pair is configured in a comb shape and is positioned on the upper side of the crystal (63) so that its electrode fingers (74) extend in z-direction along the inversion regions (68) and terminate at a distance from the waveguide (64), and that the second electrode (73) of the electrode pair is configured in the form of a strip and is arranged on the upper side of the crystal (63) on the opposite side of the waveguide (64) at a distance from and parallel to this.

15. Device according to one of Claims 1 to 14, **characterised in that** the electrodes (29, 30; 51, 52; 54, 55; 58, 59, 60; 72, 73) are made of metal and an optically transparent insulation layer is provided between the electrodes (29, 30; 51, 52; 54, 55; 58, 59, 60; 72, 73) and the crystal (16; 39; 63).

16. Device according to one of Claims 1 to 14, **characterised in that** the electrodes (29, 30; 51, 52; 54, 55; 58, 59, 60; 72, 73) are made from an optically transparent, electrically conductive material.

17. Device according to one of Claims 1 to 16, **characterised in that** the electrodes (29, 30; 51, 52; 54, 55; 58, 59, 60; 72, 73) assigned to the second grating sections (22; 42; 66) may be fed with different electric voltages (V₁, V₂, V₃, ...Vₙ).

## Revendications

1. Dispositif pour multiplier des fréquences lumineuses notamment d'une lumière laser comprenant :
- un élément optique non linéaire fabriqué à partir d'un cristal ferroélectrique en forme de plaquette ayant une structure de réseau avec des zones normales et des zones d'inversion, la direction de la polarisation spontanée étant inversée dans les zones d'Inversion par rapport à la direction normale dans les zones normales, ainsi que
- des électrodes pour générer un champ électrique et
- un guide d'ondes optique s'étendant entre deux faces frontales du cristal en forme de plaquette, le long de sa face supérieure, et croisant ainsi la structure en réseau,
**caractérisé en ce que**
la structure en réseau est composée au moins d'un premier segment de réseau (21, 41, 65) et d'un second segment de réseau (22, 42, 66) directement adjacent au premier segment de réseau (21, 41, 65),
la structure de réseau traversant complètement le cristal en forme de plaquette (16, 36, 63) de sa face supérieure (20) jusqu'à sa face inférieure (28) ; et
les électrodes (29, 30, 51, 52, 54, 55, 58, 59, 72, 73) sont associées au second segment de réseau (22, 42, 66) ;
et au moins l'une des électrodes (29, 30, 51, 52, 54, 58, 59, 72) associée à chacun des seconds segments de réseau (22, 42, 66) est en forme de peigne installé sur la face supérieure (20) du cristal (16, 39, 63) pour que les doigts formant les électrodes (56, 60, 61, 74) s'étendent le long des zones d'inversion (24, 68).

2. Dispositif selon la revendication 1,
**caractérisé en ce que**
le second segment de réseau (22, 42, 66) présente une période de réseau différente de la période de réseau du premier segment de réseau (21, 41, 65).

3. Dispositif selon la revendication 1 ou 2,
**caractérisé en ce qu'**
au moins un premier et un second segment de réseau adjacent (21, 22, 41, 42, 65, 66) forment une zone de réseau (27, 47, 71) et il y a plusieurs zones de réseau (27, 47, 71).

4. Dispositif selon la revendication 3,
**caractérisé en ce que**
les périodes de réseau des premier et/ou second segments de réseau (41, 41', 42, 42') se distinguent d'une zone de réseau (47) à l'autre (47').

5. Dispositif selon l'une des revendications 1 à 4,
**caractérisé en ce que**
le cristal (16, 39, 63) est en LiNbO₃ ou LiTaO₃.

6. Dispositif selon l'une des revendications 1 à 5,
**caractérisé en ce que**
la structure en réseau s'étend d'une face frontale (18, 48) à l'autre face frontale (19, 49) du cristal (16, 39, 63).

7. Dispositif selon l'une des revendications 1 à 6,
**caractérisé en ce que**
le cristal (16, 39) est coupé dans la direction z et le guide d'onde (17, 40) s'étend dans la direction y dans le plan x-y.

8. Dispositif selon la revendication 7,
**caractérisé en ce qu'**
à chaque second segment de réseau (22) est associée une paire d'électrodes (29, 30) en forme de peigne ;
une électrode (30) de la paire d'électrodes est installée sur la face supérieure (26) du cristal (16) pour que ces doigts (32) s'étendent dans la direction x suivant les zones normales (26) du second segment de réseau (22) et que l'autre électrode (29) de la paire d'électrodes soit installée sur la face supérieure (20) du cristal (16) pour que son doigt formant électrode (31) s'étende dans la direction x le long de la zone d'inversion (24) du second segment de réseau (22) ; et
les doigts formant des électrodes (31, 32) pour les deux électrodes (29, 30) sont suffisamment longs pour dépasser en s'interpénétrant la largeur du guide d'onde (17); et
les doigts formant les électrodes (31, 32) des deux électrodes (29, 30) sont respectivement plus étroits que la zone d'inversion et la zone normale (24, 26) dans la direction y.

9. Dispositif selon la revendication 8,
**caractérisé en ce que**
les doigts formant les électrodes (31, 32) sont chaque fois installés au milieu des zones d'inversion et des zones normales (24, 26) dans la direction des lignes de réseau.

10. Dispositif selon la revendication 7,
**caractérisé en ce qu'**
à chaque second segment de réseau (22) est associée une paire d'électrodes, et une électrode (54) de la paire est en forme de peigne installe sur la face supérieure (20) du cristal (16) pour que ces doigts formant les électrodes (56) s'étendent dans la direction x le long des zones d'inversion (24) et couvrent la largeur du guide d'ondes (17), et la seconde électrode (55) de la paire est en forme de ruban prévu sur le côté supérieur (20) du cristal (16) à une distance du guide d'ondes (17) parallèlement à celui-ci.

11. Dispositif selon la revendication 7,
**caractérisé en ce qu'**
une paire d'électrodes est associée à chaque second segment de réseau (22) et une électrode de la paire d'électrodes est en forme de peigne installé sur la face supérieure (20) du cristal (16) pour que ses doigts formant des électrodes s'étendent dans la direction x le long de la zone d'inversion (24) et se terminent à une distance du guide d'ondes, et la seconde électrode de la paire d'électrodes est en forme de ruban installé sur le côté supérieur (20) du cristal (16) dans la direction longitudinale du guide de lumière (17) en couvrant celui-ci.

12. Dispositif selon la revendication 7,
**caractérisé en ce que**
deux électrodes extérieures (58, 59) et une électrode centrale (57) sont associées à chaque second segment de réseau (22), et
l'électrode centrale (57) est en forme de ruban installé sur la face supérieure (20) du cristal (16) au milieu de celui-ci dans la direction longitudinale du guide d'ondes (17) en recouvrant celui-ci, et
les électrodes extérieures (58, 59) sont en forme de peignes installés sur le côté supérieur (20) du cristal (16) de part et d'autre du guide d'ondes (17) pour que leurs doigts formant les électrodes (60, 61) s'étendent dans la direction x le long des zones d'inversion (24) et se terminent à une certaine distance du guide d'ondes (17).

13. Dispositif selon l'une des revendications 1 à 6,
**caractérisé en ce que**
le cristal (63) est coupé dans la direction x et le guide d'ondes (64) s'étend dans la direction y dans le plan y-z ou le cristal (63) est coupé dans la direction y et le guide d'ondes (64) s'étend dans la direction x dans le plan x-z.

14. Dispositif selon la revendication 13,
**caractérisé en ce qu'**
une paire d'électrodes est associée à chaque second segment de réseau (66) et une électrode (72) de la paire est en forme de peigne installé sur la face supérieure du cristal (63) et ses doigts formant les électrodes (74) s'étendent dans la direction z le long des zones d'inversion (68) et se terminent à une certaine distance du guide d'ondes (64), et
la seconde électrode (73) de la paire d'électrodes est en forme de ruban installé sur le côté supérieur du cristal (63), du côté opposé du guide d'ondes (74) à distance et parallèlement à celui-ci.

15. Dispositif selon l'une des revendications 1 à 14,
**caractérisé en ce que**
les électrodes (29, 30, 51, 52, 54, 55, 58, 59, 60 ; 72, 73) sont en métal et entre les électrodes (29, 30, 51, 52, 54, 55, 58, 59, 60 ; 72, 73) et le cristal (16, 39, 63) on a une couche d'isolation optiquement transparente.

16. Dispositif selon l'une des revendications 1 à 14,
**caractérisé en ce que**
les électrodes (29, 30. 51, 52, 54, 55, 58, 59, 60 ; 72, 73) sont réalisées en une matière électro-conductrice, optiquement transparente.

17. Dispositif selon l'une des revendications 1 à 16,
**caractérisé en ce que**
les électrodes (29, 30, 51, 52, 54, 55, 58, 59, 60 ; 72, 73) associées au second segment de réseau (22, 42, 66) sont soumises à des tensions électriques différentes (V₁, V₂, V₃, ... Vₙ).
